# EUROPEAN PATENT SPECIFICATION

(11) **EP 4 653 258 B1**
(45) Date of publication and mention of the grant of the patent: **25.11.2026**
(21) Application number: 25171468.9
(22) Date of filing: 18.04.2025
(51) Int. Cl.: B60P 3/22, B60R 9/055

(54) **IMPROVED TUBE CONTAINER FOR VEHICLE**
VERBESSERTER RÖHRENFÖRMIGER BEHÄLTER FÜR EIN FAHRZEUG
CONTENEUR TUBULAIRE POUR VÉHICULE

(30) Priority: 22.05.2024 IT 202400011614
(43) Date of publication of application: 26.11.2025
(73) Proprietor: Lokhen S.r.l., 70022 Altamura, Bari (IT)
(72) Inventor: BUCCOLIERI, Andrea, I-70022 Altamura, BARI (IT); GRECO, Luca Oronzo, I-70022 Altamura, BARI (IT)
(74) Representative: Mitola, Marco

(56) References cited:
- EP-A1- 4 119 397
- WO-A1-2021/131323
- SE-C2- 505 918

## Description

### FIELD OF APPLICATION

The present invention relates to an improved tube container for vehicles.

### BACKGROUND ART

As is known, in the field of both industrial and non-industrial vehicles, tube containers are used, normally placed on the roof of the vehicle, directly or by interposing luggage bars in turn attached to the roof of the vehicle. EP 4 119 397 Al discloses a tube container formed by a single hollow part.

Such tube containers must have precise technical features in order to withstand the harsh conditions to which they are subjected.

First, these are containers placed outdoors, on the roof of the vehicle, and therefore must withstand atmospheric agents, ensuring the hermeticity over time, in particular avoiding possible water infiltrations therein.

Furthermore, they must ensure considerable mechanical resistance to impacts, especially avoiding the dispersion of the objects contained therein in the event of strong decelerations of the vehicle to which they are applied (e.g., in the event of impacts or accidents that can involve the vehicle).

Moreover, these tube containers must be capable of ensuring easy accessibility to the containment compartment thereof in order to allow the removal of the objects stored therein. Furthermore, once the access to the containment compartment has been opened by rotating the appropriate closing lid, it is necessary to avoid the closing lid itself from accidentally closing, for example due to its own weight, the wind or even because the vehicle is on a slope, i.e., on a road that is not perfectly flat.

The longitudinal dimensions of tube containers can vary greatly depending on the type of vehicle with which they are associated.

For these reasons, in order to reduce production costs and avoid creating specific lengths for each type of vehicle, it is known to manufacture the tube containers in two tube parts conveniently connected to each other at the inner ends, mutually facing each other. The respective outer ends, opposite to said inner ends, are provided with caps, usually made of plastic, which act as a bottom and as an opening for the insertion of objects into the tube containers.

The connection of the inner ends of the parts, mutually facing each other, is a crucial element.

In fact, such a connection must simultaneously ensure mechanical resistance and impermeability to water or external agents.

Such a connection is mechanically stressed as it represents a cantilevered point for each part which is in turn constrained, at the opposite outer end, to a vehicle support structure, such as bars fixed to the roof of the vehicle itself, for example.

Furthermore, it is necessary for such connection joints to be easily and quickly assemblable, so as to reduce assembly times and costs.

Connection joints are known, comprising two metal half-shells, possibly covered with plastic sheets, fixed together by screws or pins.

On the one hand, such solutions ensure the necessary mechanical resistance and impermeability, but on the other hand, they are expensive to manufacture and assemble.

Therefore, the solutions of the prior art are not capable of solving the above-mentioned technical problems.

### OVERVIEW OF THE INVENTION

Therefore, the need is felt to solve the drawbacks and limitations mentioned with reference to the prior art.

Such a need is met by a tube container according to claim 1.

### DESCRIPTION OF THE DRAWINGS

Further features and advantages of the present invention will be more comprehensible from the following description of preferred, non-limiting embodiments thereof, in which:

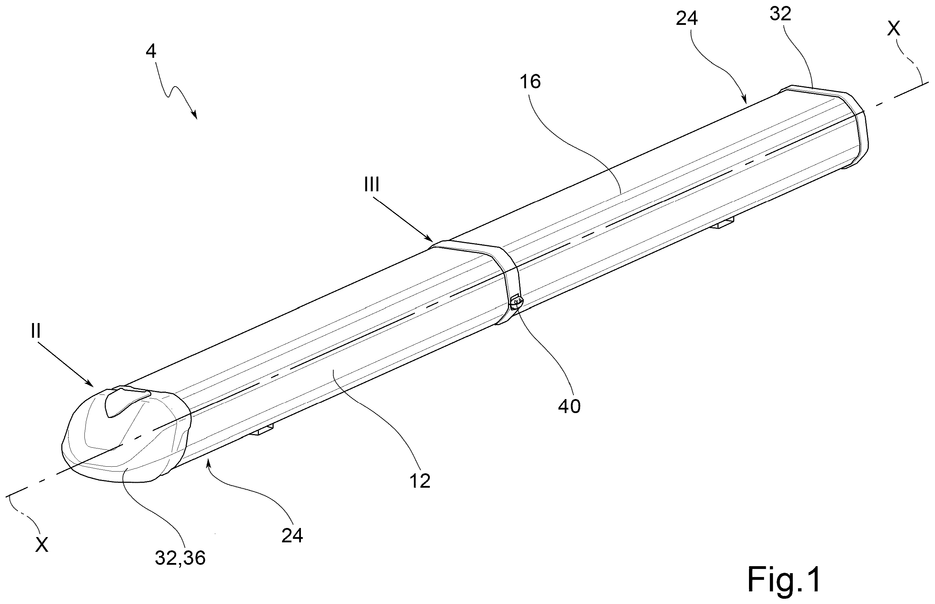

Figure 1 depicts a perspective view of a tube container for vehicles according to an embodiment of the present invention;

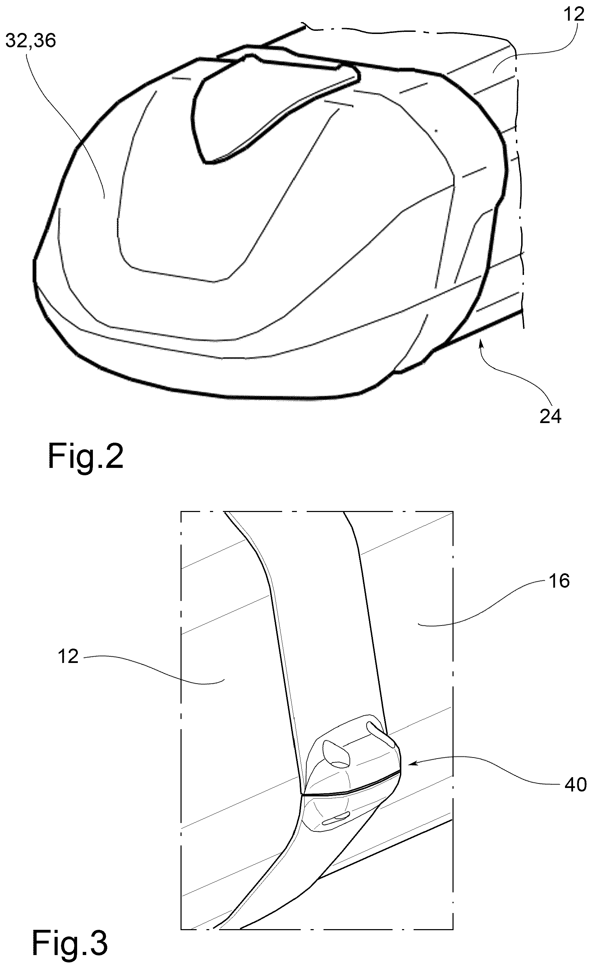

Figure 2 depicts the enlarged detail II of Figure 1;
Figure 3 depicts the enlarged detail III of Figure 1;

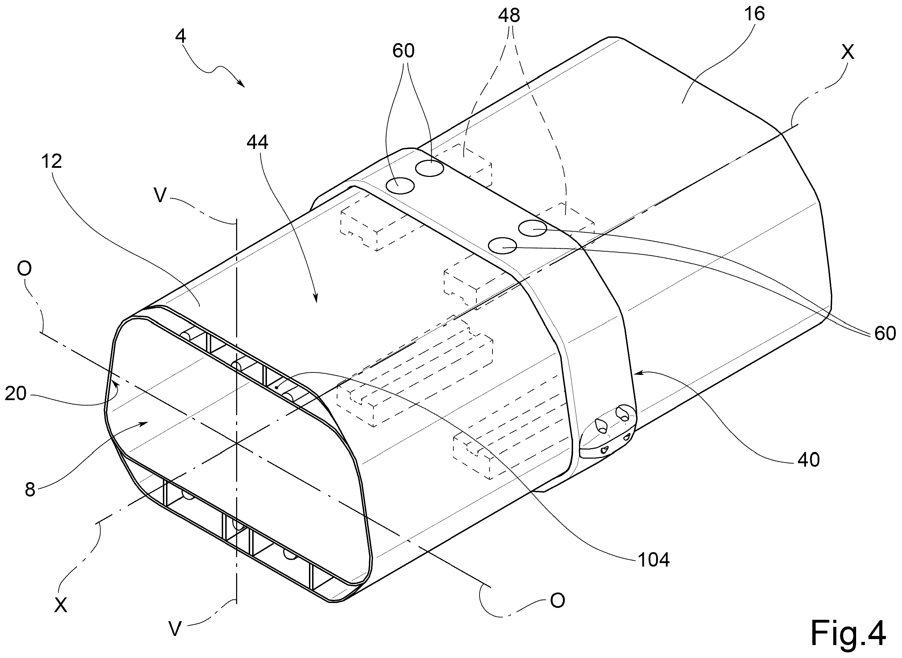

Figure 4 depicts a partially phantom, perspective view, in an assembled configuration, of a tube container according to an embodiment of the present invention;

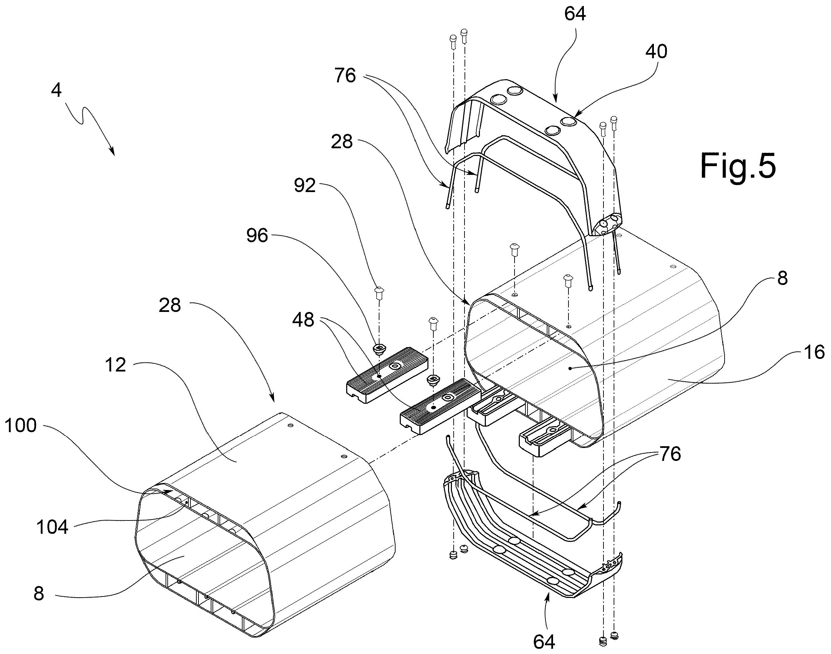

Figure 5 depicts a perspective view in an exploded configuration of the tube container in Figure 4;

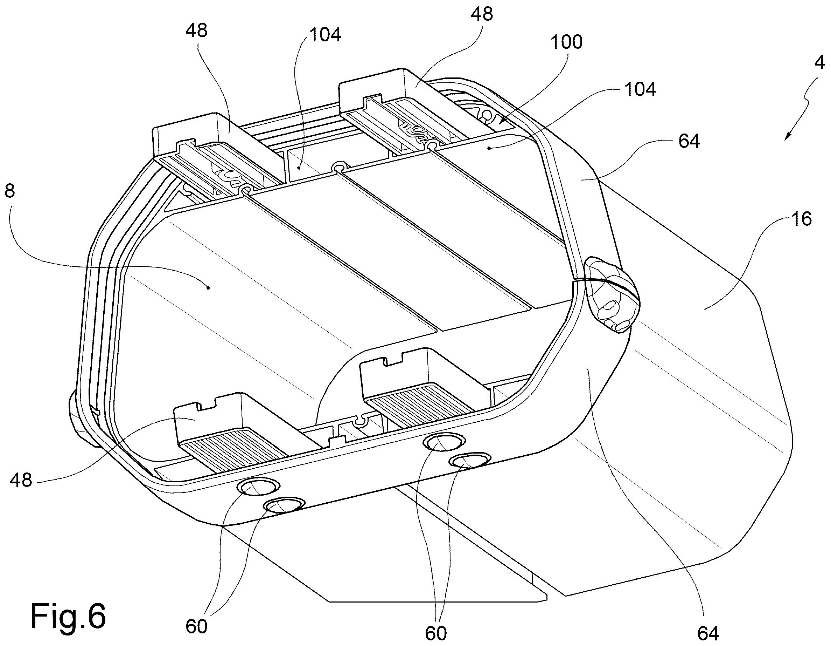

Figure 6 depicts a perspective view, in a partially assembled configuration, of the tube container in Figure 4;

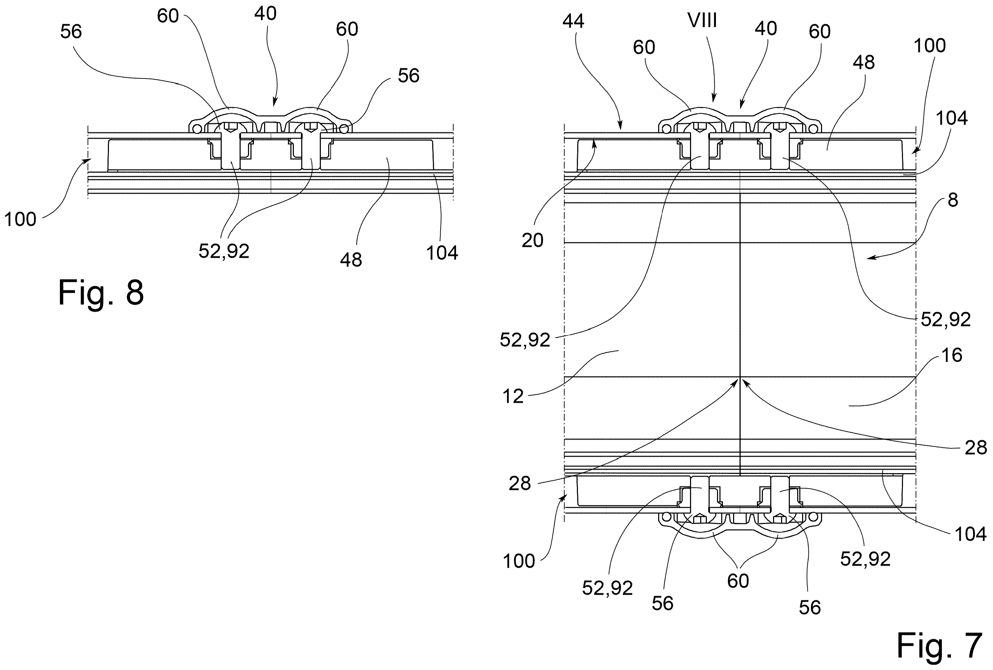

Figure 7 depicts a section view of the tube container in Figure 4;
Figure 8 depicts the enlarged detail VIII of Figure 7;

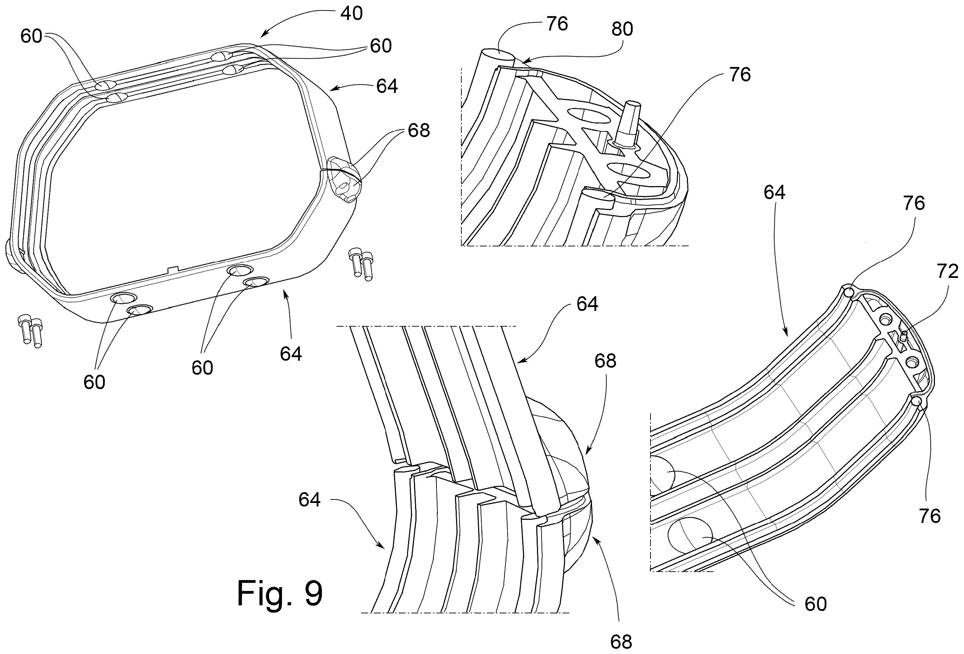

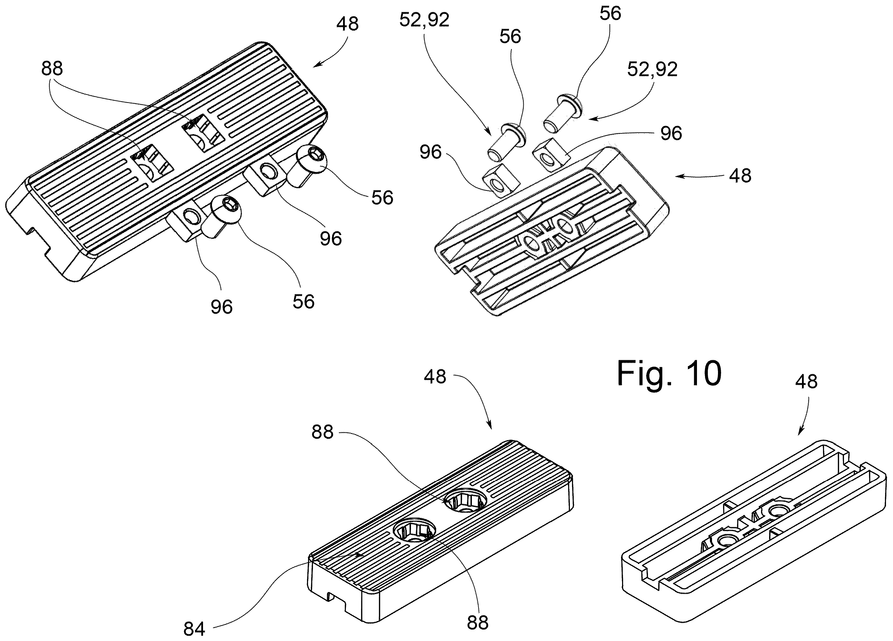

Figures 9-10 depict perspective views of various components and details of a tube container in accordance with possible embodiments of the present invention.

The elements or parts of elements common to the embodiments described below will be indicated by the same reference numerals.

### DETAILED DESCRIPTION

With reference to the above figures, the number 4 indicates as a whole a tube container for vehicles comprising a hollow device body which delimits a containment compartment 8 for objects.

In particular, the tube container 4 preferably contains elongated objects, such as tubes but not only. In any case, the type of objects contained in the containment compartment 8 is only indicative and not limiting for the purposes of the present invention.

The tube container 4 for vehicles comprises a first hollow part 12 and a second hollow part 16, provided with an inner side wall 20 peripherally closed so as to delimit a containment compartment 8 for objects.

The first part 12 and the second part 16 each extend along a main longitudinal direction X-X from a cantilevered free end 24 to an inner end 28 opposite to said free end 24. The inner ends 28 are open so as to create the single containment compartment 8 seamlessly between the first part 12 and the second part 16.

The parts 12, 16 can be made of either metal or plastic/polymer material.

A closing lid 32 is associated with the free end 24 of at least one of said parts 12,16, openable so as to allow access to the containment compartment 8, through an access hatch 36 thereof. Typically, at least one closing lid 32 is instead of the fixed type.

The inner ends 28 of said parts 12,16 directly face and are connected to each other by means of at least one joining collar 40, so as to create a single device body, parallel to said main longitudinal direction X-X.

In particular, the joining collar 40 is superimposed on the inner ends 28 of the parts 12,16 and on an outer side wall 44 opposite to the inner side wall 20 of the parts 12,16.

Advantageously, at said inner ends 28, there is provided at least one dowel 48 at least partially superimposed on said first part 12 and second part 16, on the side of said containment compartment 8 and of the inner side wall 20.

Preferably, the dowels 48 are fixed to the parts 12,16 by coupling means 52 having outer portions 56 protruding at least partially from the outer side wall 44 of the parts 12,16.

Typically, the coupling means 52 can comprise screws, bolts, and/or rivets.

Preferably, the joining collar 40 has counter-shaped portions 60 coupled by shape coupling with said outer portions 56 of the coupling means 52. Such a shape coupling ensures the positioning of the joining collar 40 along the main longitudinal direction, so as to remain positioned straddling the inner ends 28.

The joining collar 40 comprises, for example, two half-shells 64 connected to each other at opposing bases 68. The bases can be mutually fixed by screws; it is also possible to provide fixing pegs 72.

The use of screws for closing the half-shells 64 is useful in order to allow a clamping torque between the half-shells 64 as a function of the set tightening force of the screws. In fact, due to the adjustment of the tightening force, it is possible to make adjustments in order to improve the sealing of the joining collar 40 that, as seen, is typically made of a plastic material and could thus be deformed over time due to thermal expansions, vibrations, wear, and the like.

Preferably, said half-shells 64 are provided with peripheral gaskets 76 arranged upstream and downstream of the mutually facing inner ends 28 of said parts 12,16.

For example, said peripheral gaskets 76 are housed within peripheral seats 80 obtained on an inner side wall of said half-shells 64 facing the outer side wall 44 of the parts 12,16.

In accordance with a possible embodiment, a plurality of dowels 48 is provided at said inner ends 28 of the parts 12,16, at least partially superimposed on said first part 12 and second part 16, arranged on opposite sides with respect to a horizontal centerline plane O-O of said containment compartment 8.

In accordance with a possible embodiment, a plurality of dowels 48 is provided at said inner ends 28 of the parts 12,16, at least partially superimposed on said first part 12 and second part 16, arranged on opposite sides with respect to a vertical centerline plane V-V of said containment compartment 8.

For example, said dowels 48 have a parallelepiped shape. Further geometries are also possible, such as cylindrical, triangular, circular section, cross-shaped geometries, and the like, for example.

In accordance with a possible embodiment, said dowels 48 have longitudinal ribs 84, arranged parallel to said main longitudinal direction X-X.

The dowels are preferably provided with seats 88 for the coupling means 52, in particular fixing pins 92, passing through the side wall of the parts 12,16.

Preferably, said seats 88 are counter-shaped with respect to a locking nut 96 of said fixing pins 92.

For example, said seats 88 have a square section.

In accordance with a possible embodiment, the parts 12,16 have housing seats 100 for said dowels 48, delimited by internal partitions 104 with respect to the containment compartment 8.

Preferably, said housing seats 100 are at least partially counter-shaped with respect to the dowels 48.

In accordance with a possible embodiment, said dowels 48 are inserted by interlocking into said housing seats 100. It is also possible to screw the dowels 48 into threaded seats obtained in the parts 12,16.

Preferably, said dowels 48 are made of a polymer material. However, it is possible to use additional materials, including metal materials.

As can be appreciated from the above description, the present invention allows overcoming the drawbacks introduced in the prior art.

In fact, the present invention allows withstanding atmospheric agents, ensuring the required hermeticity over time, in particular avoiding possible infiltrations of water into the containment compartment.

Furthermore, the tube container is solid, equipped with adequate sealing gaskets, and does not include through rivets passing through the walls and directly exposed to the outside of the device, as in many solutions of the prior art; such through rivets are in fact the cause of water infiltration in the long run.

Moreover, the connection provided by the external collar and the internal dowels is particularly mechanically resistant.

In particular, the internal dowels ensure high bending resistance at the most crucial connection point between the two parts.

Moreover, the present invention is inexpensive and versatile to manufacture and assemble.

Furthermore, the solution is lightweight since the joining collar is not made of metal as in the solutions of the prior art, but rather made of a plastic material. However, the required resistance is ensured by the cooperation between the external collar and the internal dowels.

Furthermore, the solution of the present invention is aesthetically superior to the prior art solutions as the internal dowels ensure a more precise alignment between the parts. In addition, the present invention allows connecting together several parts typically obtained by extrusion; the fact that the parts have a reduced longitudinal extension allows obtaining more dimensionally precise components, which are thus easier to align and assemble.

On the one hand, the joining collar forms a structural stiffening element, and on the other hand it ensures the seal by virtue of the provision of sealing gaskets, conveniently pressed against the outer side wall of the parts.

In any case, the longitudinal extension of the joining collar of the present invention is highly reduced compared to the longitudinal extension of the prior art solutions, precisely by virtue of the presence of the internal dowels which significantly contribute to the overall structural rigidity of the device. In fact, in the present invention, the joining collar mainly serves a covering and water-tight function.

In other words, due to the presence of the internal dowels that align and stiffen the connection between the parts, it is possible to use a joining collar with limited longitudinal dimensions.

Furthermore, due to the coupling between the dowels and the related seats of the parts, it is possible to obtain a damping of the vibrations of the parts themselves.

In order to meet contingent, specific needs, those skilled in the art may make several changes and variations to the solutions described above.

The scope of protection of the present invention is defined by the following claims.

### REFERENCE SIGNS

- 4:: tube container
- 8:: containment compartment
- 12:: first part
- 16:: second part
- 20:: inner side wall
- 24:: free end
- 28:: inner end
- 32:: closing lid
- 36:: access hatch
- 40:: joining collar
- 44:: outer side wall
- 48:: dowel
- 52:: coupling means
- 56:: outer portions
- 60:: counter-shaped portions
- 64:: half-shells
- 68:: bases
- 72:: fixing peg
- 76:: peripheral gaskets
- 80:: peripheral seats
- 84:: longitudinal ribs
- 88:: seats
- 92:: fixing pin
- 96:: locking nut
- 100:: housing seats
- 104:: internal partitions
- X-X:: main longitudinal direction
- O-O:: horizontal centerline plane
- V-V:: vertical centerline plane

## Claims

1. A tube container (4) for vehicles comprising
- a first part (12) and a second part (16), both hollow, provided with an inner side wall (20) peripherally closed so as to delimit a containment compartment (8) for objects, said first part (12) and second part (16) each extending along a main longitudinal direction (X-X) from a cantilevered free end (24) to an inner end (28) opposite to said free end (24),
- a closing lid (32), associated with the free end (24) of at least one of said parts (12,16), openable so as to allow access to the containment compartment (8), through an access hatch (36) thereof,
- the inner ends (28) of said parts (12,16) directly facing and being connected to each other by means of at least one joining collar (40), so as to create a single device body, parallel to said main longitudinal direction (X-X), the joining collar (40) being superimposed on the inner ends (28) of the parts (12,16) and on an outer side wall (44) opposite to the inner side wall (20) of the parts (12,16),
- wherein, at said inner ends (28), at least one dowel (48) is provided at least partially superimposed on said first part (12) and second part (16), on the side of said containment compartment (8) and of the inner side wall (20), so as to constrain said parts (12,16) to each other.

2. A tube container (4) according to claim 1, wherein the dowels (48) are fixed to the parts (12,16) by coupling means (52) having outer portions (56) at least partially protruding from the outer side wall (44) of the parts (12,16) and wherein the joining collar (40) has counter-shaped portions (60) coupled by shape coupling with said outer portions (56).

3. A tube container (4) according to claim 1 or 2, wherein a plurality of dowels (48) is provided at said inner ends (28), at least partially superimposed on said first part (12) and second part (16), arranged on opposite sides with respect to a horizontal centerline plane (O-O) of said containment compartment (8).

4. A tube container (4) according to claim 1, 2 or 3, wherein a plurality of dowels (48) is provided at said inner ends (28), at least partially superimposed on said first part (12) and second part (16), arranged on opposite sides with respect to a vertical centerline plane (V-V) of said containment compartment (8).

5. A tube container (4) according to claim 1, 2, 3 or 4, wherein said dowels (48) have a parallelepiped shape.

6. A tube container (4) according to any one of claims 1 to 5, wherein said dowels (48) have longitudinal ribs (84),arranged parallel to said main longitudinal direction (X-X).

7. A tube container (4) according to any one of claims 1 to 6, wherein said dowels (48) are provided with seats (88) for fixing pins (92) passing through the side wall of the parts (12,16).

8. A tube container (4) according to claim 7, wherein said seats (88) are counter-shaped with respect to a locking nut (96) of said fixing pins (92).

9. A tube container (4) according to any one of claims 1 to 8, wherein the parts (12,16) have housing seats (100) for said dowels (48) delimited by internal partitions (104) with respect to the containment compartment (8).

10. A tube container (4) according to claim 9, wherein said housing seats (100) are at least partially counter-shaped with respect to the dowels (48).

11. A tube container (4) according to any one of claims from 9 to 10, wherein said dowels (48) are inserted by interlocking into said housing seats (100), or wherein said dowels (48) are screwed into threaded seats obtained in the parts (12,16).

12. A tube container (4) according to any one of claims from 1 to 11, wherein said dowels (48) are made of a polymer and/or metal material.

13. A tube container (4) according to any one of claims from 1 to 12, wherein said joining collar (40) comprises two half-shells (64) connected to each other at opposing bases (68).

14. A tube container (4) according to claim 13, wherein screws for closing said half-shells are provided at said bases (68) so as to vary the clamping torque between the half-shells (64) as a function of the tightening force of said screws.

15. A tube container (4) according to claim 13 or 14, wherein said half-shells (64) are provided with peripheral gaskets (76) arranged upstream and downstream of the inner ends (28) of said parts (12,16), wherein said peripheral gaskets (76) are housed within peripheral seats (80) obtained on an inner side wall (20) of said half-shells (64) facing the outer side wall (44) of the parts (12,16).

## Patentansprüche

1. Röhrenförmiger Behälter (4) für Fahrzeuge, umfassend
- einen ersten Teil (12) und einen zweiten Teil (16), beide hohl, die mit einer peripher geschlossenen inneren Seitenwand (20) versehen sind, um ein Aufnahmefach (8) für Gegenstände abzugrenzen, wobei sich der erste Teil (12) und der zweite Teil (16) jeweils entlang einer Hauptlängsrichtung (X-X) von einem auskragenden freien Ende (24) zu einem dem freien Ende (24) gegenüberliegenden inneren Ende (28) erstrecken,
- einen Verschlussdeckel (32), der dem freien Ende (24) mindestens eines der Teile (12, 16) zugeordnet ist und geöffnet werden kann, um den Zugang zum Aufnahmefach (8) durch eine Zugangsluke (36) davon zu ermöglichen,
- wobei die inneren Enden (28) der Teile (12, 16) direkt einander zugewandt sind und mittels mindestens einer Verbindungsmanschette (40) miteinander verbunden sind, um einen einzigen Vorrichtungskörper parallel zur Hauptlängsrichtung (X-X) zu bilden, wobei die Verbindungsmanschette (40) die inneren Enden (28) der Teile (12, 16) und eine der inneren Seitenwand (20) der Teile (12, 16) gegenüberliegende äußere Seitenwand (44) überlagert,
- wobei an den inneren Enden (28) mindestens ein Passstein (48) vorgesehen ist, der den ersten Teil (12) und den zweiten Teil (16) auf der Seite des Aufnahmefachs (8) und der inneren Seitenwand (20) zumindest teilweise überlagert, um die Teile (12, 16) aneinander zu fixieren.

2. Röhrenförmiger Behälter (4) nach Anspruch 1, wobei die Passsteine (48) an den Teilen (12, 16) durch Kopplungsmittel (52) befestigt sind, die äußere Abschnitte (56) aufweisen, die zumindest teilweise von der äußeren Seitenwand (44) der Teile (12, 16) hervorvorstehen, und wobei die Verbindungsmanschette (40) gegengeformte Abschnitte (60) aufweist, die durch Formschluss mit den äußeren Abschnitten (56) gekoppelt sind.

3. Röhrenförmiger Behälter (4) nach Anspruch 1 oder 2, wobei eine Vielzahl von Passsteinen (48) an den inneren Enden (28) vorgesehen ist, die den ersten Teil (12) und den zweiten Teil (16) zumindest teilweise überlagern und auf gegenüberliegenden Seiten in Bezug auf eine horizontale Mittellinienebene (O-O) des Aufnahmefachs (8) angeordnet sind.

4. Röhrenförmiger Behälter (4) nach Anspruch 1, 2 oder 3, wobei eine Vielzahl von Passsteinen (48) an den inneren Enden (28) vorgesehen ist, die den ersten Teil (12) und den zweiten Teil (16) zumindest teilweise überlagern und auf gegenüberliegenden Seiten in Bezug auf eine vertikale Mittellinienebene (V-V) des Aufnahmefachs (8) angeordnet sind.

5. Röhrenförmiger Behälter (4) nach Anspruch 1, 2, 3 oder 4, wobei die Passsteine (48) eine Parallelepipedform aufweisen.

6. Röhrenförmiger Behälter (4) nach einem der Ansprüche 1 bis 5, wobei die Passsteine (48) Längsrippen (84) aufweisen, die parallel zur Hauptlängsrichtung (X-X) angeordnet sind.

7. Röhrenförmiger Behälter (4) nach einem der Ansprüche 1 bis 6, wobei die Passsteine (48) mit Sitzen (88) für Fixierstifte (92) versehen sind, die durch die Seitenwand der Teile (12, 16) hindurchgehen.

8. Röhrenförmiger Behälter (4) nach Anspruch 7, wobei die Sitze (88) in Bezug auf eine Sicherungsmutter (96) der Fixierstifte (92) gegengeformt sind.

9. Röhrenförmiger Behälter (4) nach einem der Ansprüche 1 bis 8, wobei die Teile (12, 16) Gehäusesitze (100) für die Passsteine (48) aufweisen, die durch interne Trennwände (104) in Bezug auf das Aufnahmefach (8) abgegrenzt sind.

10. Röhrenförmiger Behälter (4) nach Anspruch 9, wobei die Gehäusesitze (100) in Bezug auf die Passsteine (48) zumindest teilweise gegengeformt sind.

11. Röhrenförmiger Behälter (4) nach einem der Ansprüche 9 bis 10, wobei die Passsteine (48) durch Formschluss in die Gehäusesitze (100) eingesetzt sind, oder wobei die Passsteine (48) in in den Teilen (12, 16) erhaltene Gewindesitze eingeschraubt sind.

12. Röhrenförmiger Behälter (4) nach einem der Ansprüche 1 bis 11, wobei die Passsteine (48) aus einem Polymer- und/oder Metallmaterial hergestellt sind.

13. Röhrenförmiger Behälter (4) nach einem der Ansprüche 1 bis 12, wobei die Verbindungsmanschette (40) zwei Halbschalen (64) umfasst, die an gegenüberliegenden Basen (68) miteinander verbunden sind.

14. Röhrenförmiger Behälter (4) nach Anspruch 13, wobei Schrauben zum Schließen der Halbschalen an den Basen (68) vorgesehen sind, um das Klemmmoment zwischen den Halbschalen (64) in Abhängigkeit von der Anzugskraft der Schrauben zu variieren.

15. Röhrenförmiger Behälter (4) nach Anspruch 13 oder 14, wobei die Halbschalen (64) mit Umfangsdichtungen (76) versehen sind, die stromaufwärts und stromabwärts der inneren Enden (28) der Teile (12, 16) angeordnet sind, wobei die Umfangsdichtungen (76) in Umfangssitzen (80) untergebracht sind, die an einer der äußeren Seitenwand (44) der Teile (12, 16) zugewandten inneren Seitenwand (20) der Halbschalen (64) erhalten sind.

## Revendications

1. Un conteneur tubulaire (4) pour véhicules comprenant
- une première partie (12) et une seconde partie (16), toutes deux creuses, pourvues d'une paroi latérale intérieure (20) fermée sur son pourtour de manière à délimiter un compartiment de rangement (8) pour des objets, lesdites première partie (12) et seconde partie (16) s'étendant chacune le long d'une direction longitudinale principale (X-X) depuis une extrémité libre en porte-à-faux (24) jusqu'à une extrémité intérieure (28) opposée à ladite extrémité libre (24),
- un couvercle de fermeture (32), associé à l'extrémité libre (24) d'au moins une desdites parties (12, 16), pouvant d'ouvrir de manière à permettre l'accès au compartiment de rangement (8), par l'intermédiaire d'une trappe d'accès (36) de celui-ci,
- les extrémités intérieures (28) desdites parties (12, 16) se faisant directement face et étant reliées entre elles au moyen d'au moins un collier de jonction (40), de manière à former un seul corps de dispositif, parallèle à ladite direction longitudinale principale (X-X), le collier de jonction (40) venant se superposer aux extrémités intérieures (28) des parties (12, 16) et à une paroi latérale extérieure (44) opposée à la paroi latérale intérieure (20) des parties (12, 16),
- dans lequel, au niveau desdites extrémités intérieures (28), au moins un goujon (48) est prévu, superposé au moins partiellement à ladite première partie (12) et à ladite seconde partie (16), du côté dudit compartiment de rangement (8) et de la paroi latérale intérieure (20), de manière à solidariser lesdites parties (12, 16) l'une à l'autre.

2. Un conteneur tubulaire (4) selon la revendication 1, dans lequel les goujons (48) sont fixés aux parties (12, 16) par des moyens d'accouplement (52) comportant des parties extérieures (56) faisant au moins partiellement saillie de la paroi latérale extérieure (44) des parties (12, 16) et dans lequel le collier de jonction (40) comporte des parties de forme complémentaire (60) accouplées par complémentarité de forme avec lesdites parties extérieures (56).

3. Un conteneur tubulaire (4) selon la revendication 1 ou 2, dans lequel une pluralité de goujons (48) est prévue au niveau desdites extrémités intérieures (28), au moins partiellement superposés à ladite première partie (12) et à ladite seconde partie (16), disposés de part et d'autre d'un plan médian horizontal (O-O) dudit compartiment de rangement (8).

4. Un conteneur tubulaire (4) selon la revendication 1, 2 ou 3, dans lequel une pluralité de goujons (48) est prévue au niveau desdites extrémités intérieures (28), au moins partiellement superposés à ladite première partie (12) et à ladite seconde partie (16), disposés de part et d'autre d'un plan médian vertical (V-V) dudit compartiment de rangement (8).

5. Un conteneur tubulaire (4) selon la revendication 1, 2, 3 ou 4, dans lequel lesdits goujons (48) ont une forme parallélépipédique.

6. Un conteneur tubulaire (4) selon l'une quelconque des revendications 1 à 5, dans lequel lesdits goujons (48) comportent des nervures longitudinales (84), disposées parallèlement à ladite direction longitudinale principale (X-X).

7. Un conteneur tubulaire (4) selon l'une quelconque des revendications 1 à 6, dans lequel lesdits goujons (48) sont munis de logements (88) destinés à recevoir des goupilles de fixation (92) traversant la paroi latérale des parties (12, 16).

8. Un conteneur tubulaire (4) selon la revendication 7, dans lequel lesdits logements (88) sont contre-formés par rapport à un écrou de blocage (96) desdites goupilles de fixation (92).

9. Un conteneur tubulaire (4) selon l'une quelconque des revendications 1 à 8, dans lequel les parties (12, 16) comportent des logements (100) pour lesdits goujons (48), délimités par des cloisons internes (104) par rapport au compartiment de rangement (8).

10. Un conteneur tubulaire (4) selon la revendication 9, dans lequel lesdits logements (100) sont au moins partiellement contre-formés par rapport aux goujons (48).

11. Un conteneur tubulaire (4) selon l'une quelconque des revendications 9 à 10, dans lequel lesdits goujons (48) sont insérés par emboîtement dans lesdits logements (100), ou dans lesquels lesdits goujons (48) sont vissés dans des logements filetés réalisés dans les parties (12, 16).

12. Un conteneur tubulaire (4) selon l'une quelconque des revendications 1 à 11, dans lequel lesdits goujons (48) sont réalisés en un matériau polymère et/ou métallique.

13. Un conteneur tubulaire (4) selon l'une quelconque des revendications 1 à 12, dans lequel ledit collier de jonction (40) comprend deux demi-coques (64) reliées l'une à l'autre au niveau de bases opposées (68).

14. Un conteneur tubulaire (4) selon la revendication 13, dans lequel des vis destinées à fermer lesdites demi-coques sont prévues au niveau desdites bases (68), de manière à faire varier le couple de serrage entre les demi-coques (64) en fonction de la force de serrage desdites vis.

15. Un conteneur tubulaire (4) selon la revendication 13 ou 14, dans lequel lesdites demi-coques (64) sont munies de joints périphériques (76) disposés en amont et en aval des extrémités intérieures (28) desdites parties (12, 16), lesdits joints périphériques (76) étant logés dans des logements périphériques (80) obtenus sur une paroi latérale intérieure (20) desdites demi-coques (64) faisant face à la paroi latérale extérieure (44) des parties (12, 16).
